# EUROPEAN PATENT APPLICATION

(11) **EP 2 237 455 A2**
(43) Date of publication of application: **06.10.2010**
(21) Application number: 10150971.9
(22) Date of filing: 18.01.2010
(51) Int. Cl.: H04B 15/02, H04B 1/52

(54) **Noise canceller and electronic device using the same**

(30) Priority: 03.04.2009 JP 2009091065
(71) Applicant: Panasonic Corporation, Kadoma-shi Osaka 571-8501 (JP)
(72) Inventor: Itou, Hideyuki, Osaka-shi Osaka 540-6207 (JP); Hibino, Yasuhiro, Osaka-shi Osaka 540-6207 (JP); Shibata, Junichi, Osaka-shi Osaka 540-6207 (JP)
(74) Representative: Grünecker, Kinkeldey, Stockmair & Schwanhäusser Anwaltssozietät

(57) **Abstract**

A noise canceller includes an input terminal for receiving an input signal containing a received signal and a first noise signal generated by a noise source, a first delay unit for delaying the input signal, a pick-up antenna for receiving a second noise signal generated by the noise source, a cancel-signal generator for generating a noise-canceling signal based on the second noise signal, and a combiner for combining the delayed input signal and the noise-canceling signal so as to cancel the first noise signal contained in the input signal, and outputting the received signal. The noise canceller can includes a second delay unit for delaying the second signal instead of the first delay unit or in addition to the first delay unit. This noise canceller cancels the noise signal generated by the noise source, thereby providing an electronic device having a preferable receiving sensitivity.

## Description

### FIELD OF THE INVENTION

The present invention relates to a noise canceller for canceling a received noise signal, and to an electronic device including the noise canceller.

### BACKGROUND OF THE INVENTION

Portable devices have recently had a small weight and a small size due to components having s small size and semiconductor devices having large integration. Such portable devices have had various functions, such as telephones, games, computers, and dictionaries, and further, had even a function receiving television broadcasting.

In a conventional portable device disclosed in Japanese Patent Laid-Open Publication No.2008-22294, a clock signal and its harmonics output from the device enter, as a noise signal, from an antenna for receiving television signals. Terrestrial digital television broadcasting requires low transmission power preventing the broadcasting from interfering currently-available analog broadcasting, the noise signal may reduce the receiving sensitivity of the conventional portable devices under a poor radio wave condition, possibly preventing the devices from receiving the digital television broadcasting.

### SUMMARY OF THE INVENTION

A noise canceller includes an input terminal for receiving an input signal containing a received signal and a first noise signal generated by a noise source, a first delay unit for delaying the input signal, a pick-up antenna for receiving a second noise signal generated by the noise source, a cancel-signal generator for generating a noise-canceling signal based on the second noise signal, and a combiner for combining the delayed input signal and the noise-canceling signal so as to cancel the first noise signal contained in the input signal, and outputting the received signal. The noise canceller can includes a second delay unit for delaying the second signal instead of the first delay unit or in addition to the first delay unit.

This noise canceller cancels the noise signal generated by the noise source, thereby providing an electronic device with a preferable receiving sensitivity.

### BRIEF DESCRIPTION OF THE DRAWINGS

Fig. 1 is a block diagram of an electronic device according to Exemplary Embodiment 1 of the present invention.
Figs. 2 and 3 illustrate signals of the electronic device according to Embodiment 1.
Fig. 4 is a block diagram of an electronic device according to Exemplary Embodiment 2 of the invention.
Fig. 5 illustrates signals of the electronic device according to Embodiment 2.
Fig. 6 is a block diagram of an electronic device according to Exemplary Embodiment 3 of the invention.
Fig. 7 is a block diagram of another electronic device according to Embodiment 3.

### DETAILED DESCRIPTION OF PREFERRED EMBODIMENT

### Exemplary Embodiment 1

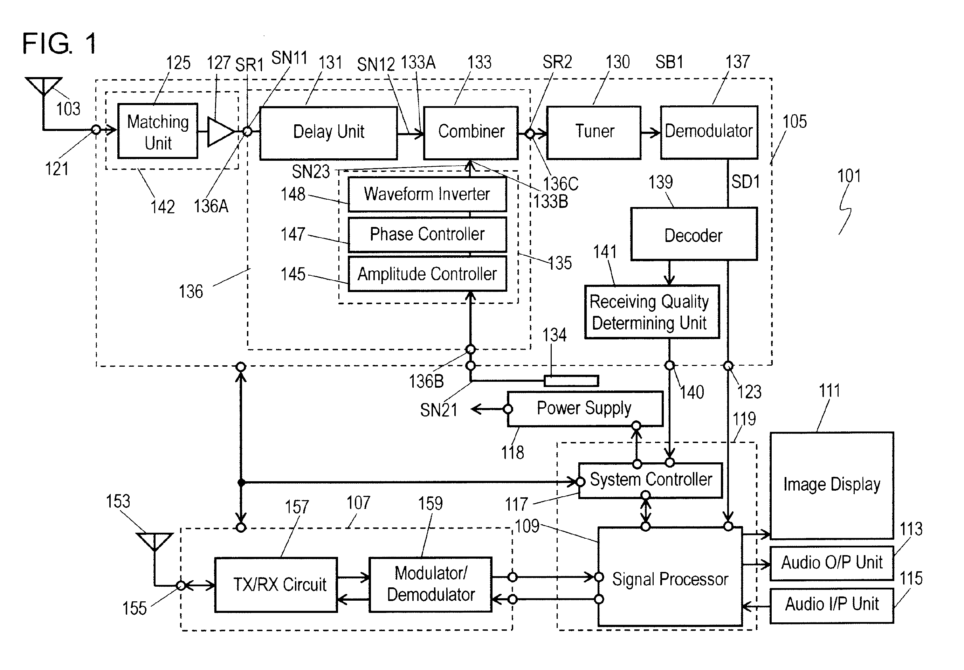

Fig. 1 is a block diagram of portable device 101, an electronic device according to Exemplary Embodiment 1 of the present invention. Portable device 101 can receive a television signal in a UHF band.

Portable device 101 includes antenna 103 adapted to receive the television signal in the UHF band as a radio frequency (RF) signal, an RF receiving section 105 receiving the RF signal received from antenna 103, transmitting/receiving section 107 transmitting and receiving radio waves, signal processor 109 processing signals output from RF receiving section 105 and transmitting/receiving section 107, image display 111 displaying an image based on the signals processed by signal processor 109, audio output unit 113 outputting sounds based on the signals processed by signal processor 109, audio input unit 115 inputting audio signals to signal processor 109, system controller 117, and power supply 118. System controller 117 controls RF receiving section 105, transmitting/receiving section 107, and signal processor 109. Power supply 118 controls power supplied to RF receiving section 105 and transmitting/receiving section 107 according to a control signal from system controller 117. Signal processor 109 and system controller 117 together constitute image generator 119.

RF receiving section 105 will be first described below. RF receiving section 105 includes input terminal 121 and output terminal 123. Input terminal 121 receives the RF signal received by antenna 103. Output terminal 123 outputs a transport stream (TS) signal obtained by demodulating the RF signal.

RF receiving section 105 includes matching unit 125, RF amplifier 127, delay unit 131, combiner 133, tuner 130, demodulator 137, and decoder 139. Matching unit 125 matches the impedance of antenna 103. RF amplifier 127 amplifies the RF signal and outputs the amplified RF signal. Delay unit 131 delays the signal output from RF amplifier 127 by a predetermined delay time, and outputs the delayed signal. Combiner 133 has input port 133A for receiving the signal output from delay unit 131. Tuner 130 tunes the received signal output from combiner 133 and outputs a signal having a predetermined frequency. Demodulator 137 demodulates the signal output from tuner 130 and outputs a digital signal. Decoder 139 performs error correction on the demodulated digital signal, and decodes the error-corrected digital signal. Matching unit 125 matches the impedance of antenna 103 to that of RF amplifier 127. The signal output from RF amplifier 127 is input to delay unit 131 via input terminal 136A. The signal output from combiner 133 is supplied to tuner 130 via output terminal 136C.

Receiving-signal-quality determining unit 141 for determining the quality of the signal is connected between decoder 139 and output terminal 140.

Matching unit 125 and RF amplifier 127 together constitute antenna matching unit 142.

Pick-up antenna 134 is located close to power supply 118. Power supply 118 generates a noise signal. Pick-up antenna 134 picks up the noise signal and supplies the noise signal to input terminal 136B.

Noise canceller 136 includes pick-up antenna 134, input terminal 136B, delay unit 144, amplitude controller 145, phase controller 147, waveform inverter 148, delay unit 131, and combiner 133. Delay unit 144 delays a noise signal input via input terminal 136B by a predetermined delay time and output the delayed signal. Amplitude controller 145 controls the amplitude of the noise signal. Phase controller 147 controls the phase of the noise signal. Waveform inverter 148 inverts the phase of the noise signal. Combiner 133 has input port 133B receiving a signal output from waveform inverter 148.

Amplitude controller 145, phase controller 147, and waveform inverter 148 together constitute cancel-signal generator 135 for generating a canceling signal.

In cancel-signal generator 135 shown in Fig. 1, amplitude controller 145, phase controller 147, and waveform inverter 148 are connected in this order between input terminal 136B and combiner 133, but the order may be changed.

Pick-up antenna 134 can be implemented by, e.g. a chip inductor or a printed pattern.

Transmitting/receiving section 107 includes transmitting/receiving antenna 153 for transmitting and receiving signals of portable telephone, input terminal 155 connected to antenna 153, transmitting/receiving circuit 157 for processing the signals transmitted and received by antenna 153, and modulator/demodulator 159 connected to transmitting/receiving circuit 157. Modulator/demodulator 159 modulates a signal output from signal processor 109 and supplies the modulated signal to transmitting/receiving circuit 157, and also demodulates a signal output from transmitting/receiving circuit 157 and supplies the modulated signal to signal processor 109.

An operation of portable device 101 will be described below with referring to Fig. 1.

The following description is focused on transmitting/receiving section 107. A signal received by transmitting/receiving antenna 153 is tuned by transmitting/receiving circuit 157, and is converted into a signal having a lower frequency, and the converted signal is input to modulator/demodulator 159. The signal is converted to a baseband signal by modulator/demodulator 159 and then input to signal processor 109. Signal processor 109 sends an image signal and an audio signal to image display 111 and audio output unit 113, respectively, according to the baseband signal, so that a user can see the image signal as images and hear the audio signal as sounds.

Audio input unit 115 outputs, to signal processor 109, an audio signal based on sounds input to audio input unit 115. Signal processor 109 converts the audio signal to a digital signal and supplies the digital signal to modulator/demodulator 159. The digital signal is modulated by modulator/demodulator 159, converted to an RF signal by transmitting/receiving circuit 157, and transmitted from transmitting/receiving antenna 153.

Next, an operation of RF receiving section 105 will be described below. A television broadcast signal received by antenna 103 is supplied to antenna matching unit 142. Antenna matching unit 142 includes matching unit 125 and RF amplifier 127 as to perform impedance matching.

Power supply 118 includes, for example, a DC-DC converter having an oscillator, and generates noise signal SN11. This noise signal may enter in a line between antenna 103 and RF amplifier 127. In this case, received signal SR1 output from antenna matching unit 142 is input to noise canceller 136 via input terminal 136A together with noise signal SN11 entering in the line between antenna 103 and RF amplifier 127. Thus, input terminal 136A receives an input signal containing received signal SR1 and noise signal SN11.

Noise canceller 136 cancels noise signal SN11 input via input terminal 136A based on noise signal SN21 picked up by pick-up antenna 134.

Both of noise signals SN11 and SN21 are noise components generated by power supply 18. Noise signals SN11 and SN21 are different from each other in amplitude and phase since the distance from antenna 10 to RF amplifier 127 is different from the distance from power supply 18 to pick-up antenna 134.

Output terminal 136C of noise canceller 136 outputs, to tuner 130, received signal SR2 in which noise signal SN11 is cancelled. Tuner 130 converts received signal SR2 to baseband signal SB1 having a lower frequency.

Baseband signal SB1 is input to demodulator 137 to be demodulated, and then input as demodulated signal SD1 to decoder 139. Decoder 139 decodes demodulated signal SD1, and outputs a transport stream (TS) signal via output terminal 123.

Signal processor 109 outputs an image signal and an audio signal based on the TS signal. Image display 111 displays an image based on the image signal. Audio output unit 113 outputs sounds based on the audio signal.

System controller 117 selects a channel to be received by RF receiving section 105, and controls demodulator 137 and decoder 139.

Decoder 139 supplies, to receiving-signal-quality determining unit 141, a receiving quality signal, such as a bit error rate (BER) or a carrier-to-noise (C/N) ratio, indicating the quality of received signal SR1 based on the TS signal. Receiving-signal-quality determining unit 141 outputs a quality determination signal via output terminal 140 based on the receiving quality signal. System controller 117 is operable to control delay unit 131, amplitude controller 145, and phase controller 147 based on the quality determination signal.

Portable device 101 including RF receiving section 105 capable of receiving a television signal has a small size, and accordingly, allows the noise signals to enter in tuner 130 from antenna 103. The noise signals includes harmonic of a clock signal or an oscillation signal from a noise source, such as power supply 118. If the noise signals have the same frequency as the television signal, the noise signals deteriorates receiving sensitivity of RF receiving section 105 to receive television signals in a region having weak electric fields.

Harmonic of a clock signal for controlling image generator 119 and image display 111 can become the noise signal.

Next, an operation of noise canceller 136 will be described below.

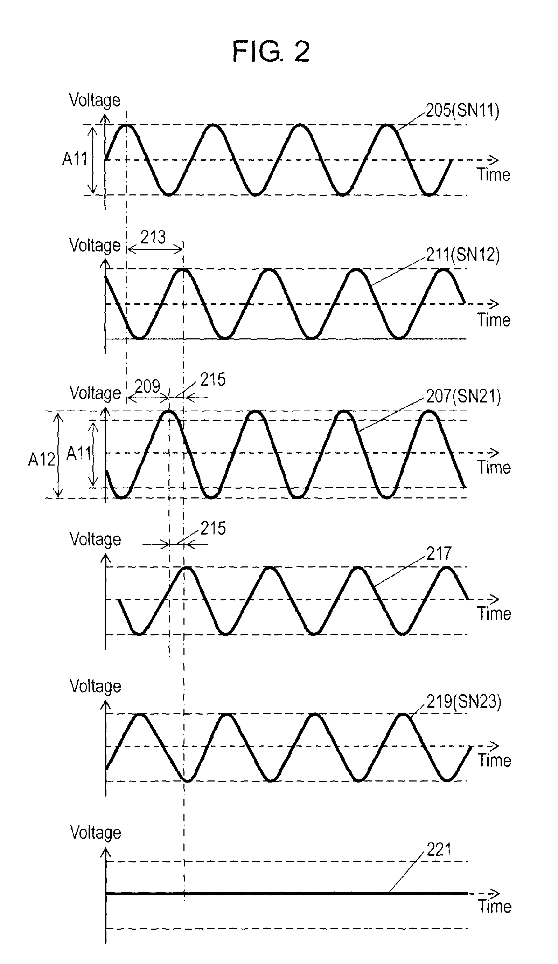

First, the operation will be described in the case that the noise source, power supply 118, generates a regular noise signal having the same waveform appearing repetitively. Fig. 2 illustrates signals of noise canceller 136 in the case that the noise signal has the regular signal. In Fig. 2, the horizontal axis represents a voltage of the signals, and the vertical axis represents time.

Fig. 2 illustrates noise signal 205, noise signal SN11 entering input terminal 136A. Noise signal 205 (SN11) is a sine wave signal, a regular signal.

Fig. 2 also illustrates noise signal 207, noise signal SN21 input to input terminal 136B. Noise signal 207 (SN21) is delayed with respect to noise signal 205 (SN11) by phase difference 209, and has amplitude A12 larger than amplitude A11 of noise signal 205.

Fig. 2 also illustrates noise signal 211, noise signal SN12 output from delay unit 131. Delay unit 131 generates noise signal 211 by delaying noise signal 205 by delay time Ta. Phase difference 213 corresponding to delay time Ta is as close to phase difference 209 as possible, and is larger than phase difference 209. Phase difference 215 provided by subtracting phase difference 209 from phase difference 213 is adjusted by phase controller 147. Thus, phase difference 213 corresponding to delay time Ta is determined such that phase difference 215 is smaller than a phase difference which can be adjusted by phase controller 147. Thus, when the phase of noise signal SN11 advances with respect to the phase of noise signal SN21, delay unit 131 delays noise signal SN11 such that the phase of noise signal SN12 is delayed with respect to the phase of noise signal SN21, and approaches the phase of noise signal SN21.

Thus, noise signal 211 is delayed with respect to noise signal 207 by phase difference 215 provided by subtracting phase difference 209 from phase difference 213. Phase difference 215 is determined to be smaller than, e.g. 90 degrees to greatly reduce a settling time of phase controller 147, thereby reducing the time required for noise canceling.

Fig. 2 also illustrates noise signal 217 output from phase controller 147. Amplitude controller 145 controls the amplitude of noise signal 207 (SN21), and phase controller 147 delays the phase of noise signal 207 by phase difference 215, thereby providing noise signal 217.

Fig. 2 also illustrates noise-canceling signal 219, noise-canceling signal SN23 output from waveform inverter 148. Waveform inverter 148 inverts the waveform of noise signal 217 so as to generate noise-canceling signal 219, which is noise-canceling signal SN23, and outputs the noise-canceling signal to combiner 133.

Noise-canceling signal 219 (SN23) has the same amplitude as noise signal 211 (SN12) and has the phase opposite to that of noise signal 211 (SN12).

Fig. 2 also illustrates noise signal 221 output from combiner 133. Combiner 133 adds up noise signal 211 and noise-canceling signal 219, and outputs noise signal 221.

Noise signal 211 and noise-canceling signal 219 which have the same amplitude and the opposite phase are offset from each other in noise signal 221. Thus, the signal output from combiner 133 via terminal 136C does not contain any noise component.

Thus, when the phase of noise signal 205 (SN11) advances with respect to the phase of noise signal 207 (SN21), delay unit 131 delays noise signal 205 to generate noise signal 211 (SN12).

Cancel-signal generator 135 and combiner 133 cancel the noise entering in antenna 103 from power supply 134 as the noise source as to prevent the noise signal from being output from output terminal 136C and as to output only the received signal from the output terminal.

Upon receiving the receiving quality signal indicating the quality of received signal SR1 from decoder 139, receiving-signal-quality determining unit 141 outputs the quality determination signal via output terminal 140 based on the receiving quality signal. When receiving-signal-quality determining unit 141 determines that the quality of the signal deteriorates, noise canceller 136 cancels the noise signal according to the control signal from system controller 117. Then, decoder 139 determines the quality of received signal SR1. This operation is repeated to finally optimize the amplitude of the signal output from amplitude controller 145 and the phase of the signal output from phase controller 147.

When portable device 101, the electronic device according to this embodiment receives a television signal in a UHF band, a UHF noise signal can be the harmonic components of a clock signal or an oscillation signal.

UHF harmonics are susceptible to temperature changes or generated by combining harmonics reflected inside portable device 101, and therefore, often have an irregular waveform.

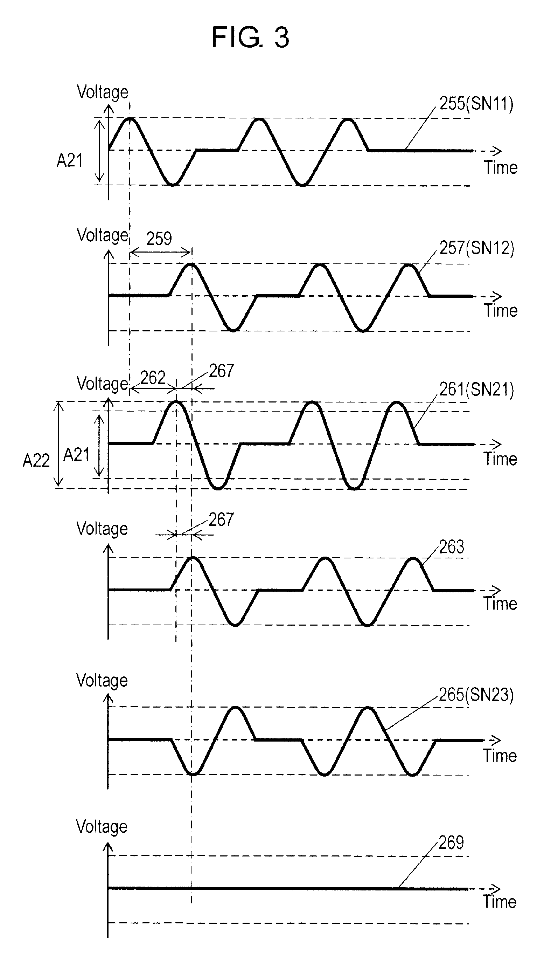

An operation of noise canceller 136 will be described below in the case that the noise signal generated by power supply 134 as the noise source is an irregular signal. Fig. 3 illustrates signals of noise canceller 136 when the noise signal is the irregular signal. In Fig. 3, the horizontal axis represents a voltage of the signals, and the vertical axis represents time.

Fig. 3 illustrates noise signal 255 which is noise signal SN11 input to input terminal 136A. Noise signal 255 is an irregular signal having discontinuous sine waves.

Fig. 3 also illustrates noise signal 261 which is noise signal SN21 input to input terminal 136B. Noise signal 261 (SN21) is delayed with respect to noise signal 255 (SN11) by phase difference 262, and has amplitude A22 larger than amplitude A21 of noise signal 255 (SN11).

Fig. 3 also illustrates noise signal 257 which is noise signal SN12 output from delay unit 131. Delay unit 131 generates noise signal 257 (SN12) by delaying noise signal 255 (SN11) by delay time Tb. Phase difference 259 corresponding to delay time Tb is larger than phase difference 262 and decreases phase difference 267 as much as possible.

As a result, noise signal 257 is delayed with respect to noise signal 261 by phase difference 267. The delay time of delay unit 131 can be determined such that phase difference 267 is, for example, smaller than 90 degrees. This reduces a settling time to repeating the operation of phase controller 147, thereby reducing the time required for noise canceling.

Fig. 3 also illustrates noise signal 263 output from phase controller 147. Amplitude controller 145 controls the amplitude of noise signal 261 (SN21), and phase controller 147 delays the phase of noise signal 261 by phase difference 267, thereby providing noise signal 263.

Fig. 3 also illustrates noise-canceling signal 265 which is noise-canceling signal SN23 output from waveform inverter 148.

Waveform inverter 148 inverts the waveform of noise signal 263 so as to generate noise-canceling signal 265 (SN23) and output noise-canceling signal 265 (SN23) to combiner 133. Noise-canceling signal 265 (SN23) has the same amplitude as noise signal 257 (SN12), and has the phase opposite to the phase of noise signal 257 (SN12).

Fig. 3 also illustrates noise signal 269 output from combiner 133. Combiner 133 adds up noise signal 257 and noise-canceling signal 265 to provide noise signal 269.

Combiner 133 outputs noise signal 269 in which noise signal 257 (SN12) is canceled with noise-canceling signal 265 (SN23).

Thus, when the phase of noise signal SN11 advances largely with respect to the phase of noise signal SN21, delay unit 131 delays the phase of noise signal SN11. This operation reduces the phase difference between noise signal SN12 input to combiner 133 and noise-canceling signal SN23 as much as possible such that the phase difference between noise signal SN12 and noise-canceling signal SN23 is smaller than a phase difference which can be controlled by phase controller 147.

This operation reduces the number of times to repeating the operation of cancel-signal generator 135 to produce noise-canceling signal SN23.

Thus, noise canceller 136 can cancels nose signal SN12 in a short time, thus rapidly improving the receiving sensitivity deteriorating in a region having weak electric fields.

Delay unit 131 can be implemented by a circuit including passive components, such as capacitors, inductors, and resistors to determine the predetermined delay time.

The predetermined delay time of delay unit 131 can be changed appropriately according a channel or a frequency of the received signal. This operation reduces the time to adjust the delay time of delay unit 131 to have an optimum value.

### Exemplary Embodiment 2

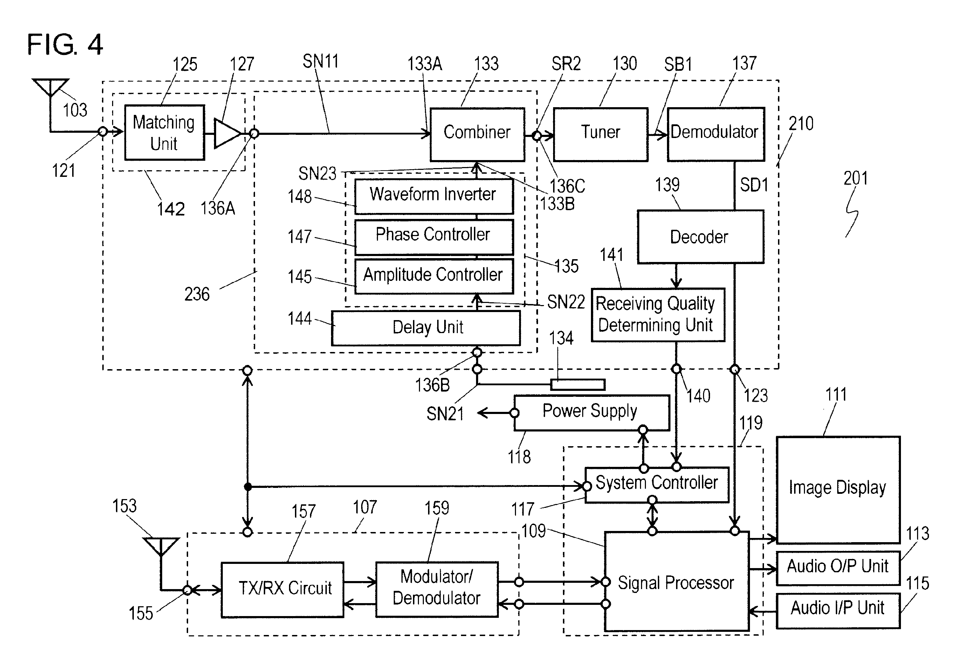

Fig. 4 is a block diagram of portable device, an electronic device according to Exemplary Embodiment 2 of the present invention. Portable device 201 includes radio frequency (RF) receiving section 210 for receiving an RF signal from antenna 103. In Fig. 4, components identical to those of portable device 101 according to Embodiment 1 shown in Fig. 1 are denoted by the same reference numerals.

Portable device 101 according to Embodiment 1 includes delay unit 131. Instead, portable device 201 according to Embodiment 2 includes delay unit 144 connected between pick-up antenna 134 and cancel-signal generator 135.

Portable device 201 operates basically identically to portably device 101 shown in Fig. 1.

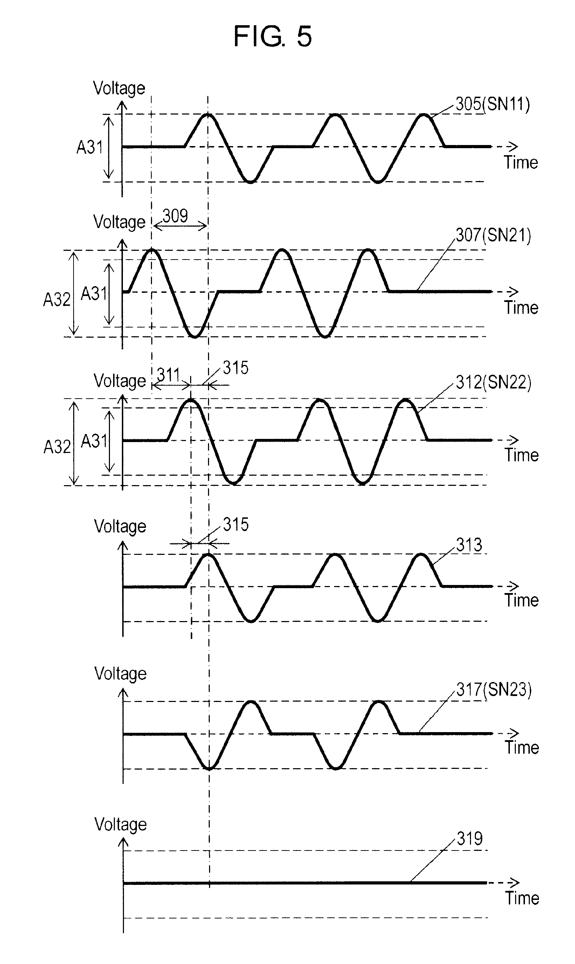

An operation of portable device 201 according to Embodiment 2 will be described below in the case that a noise signal generated by the noise source is an irregular waveform, and noise signal SN21 input to input terminal 136B advances in phase with respect to noise signal SN11 input to input terminal 136A. Fig. 5 illustrates signals of noise canceller 136. In Fig. 5, the horizontal axis represents a voltage of the signals, and the vertical axis represents time.

Fig. 5 illustrates noise signal 305 which is noise signal SN11 input to input terminal 136A. Noise signal 305 (SN11) is an irregular signal having discontinuous sine waves.

Fig. 5 also illustrates noise signal 307 which is noise signal SN21 input to input terminal 136B.

Noise signal 307 (SN21) advances with respect to noise signal 305 by phase difference 309, and has amplitude A32 larger than amplitude A31 of noise signal 306.

Fig. 5 also illustrates noise signal 312 which is noise signal SN22 output from delay unit 144. Delay unit 144 generates noise signal 312 (SN22) by delaying noise signal 307 (SN21) by delay time Tc.

Phase difference 311 corresponding to delay time Tc is smaller than phase difference 309 and is determined such that phase difference 315 is smaller than a phase difference which can be controlled by phase controller 147, and that phase difference 315 is as small as possible. Phase difference 315 is determined to be smaller than, e.g. 90 degrees to reduce a settling time to repeating the operation of phase controller 147, thereby reducing the time required for noise canceling.

Noise signal 312 (SN12) has amplitude A32 larger than amplitude A31 of noise signal 305.

Fig. 5 also illustrates noise signal 313 output from phase controller 147. Amplitude controller 145 controls the amplitude of noise signal 312 (SN12), and phase controller 147 delays noise signal 312 by phase difference 315, thereby providing noise signal 313

Fig. 5 also illustrates noise-canceling signal 317 which is noise-canceling signal SN23 output from waveform inverter 148. Waveform inverter 148 inverts the waveform of noise signal 313 so as to generate noise-canceling signal 317. Noise-canceling signal 317 (SN23) has the same amplitude as noise signal 305 (SN12) and the phase opposite to the phase noise signal 305 (SN12).

Fig. 5 illustrates noise signal 319 output from combiner 133. Combiner 133 adds up noise signal 305 and noise-canceling signal 317 to provide noise signal 319.

Combiner 133 outputs noise signal 319 in which noise signal 305 (SN11) is canceled with noise-canceling signal 317 (SN23), and thus, noise signal 319 does not contain any noise component.

Thus, when the phase of noise signal SN21 advances largely with respect to the phase of noise signal SN11, delay unit 144 delays the phase of noise signal SN21. This operation reduces the phase difference between noise signal SN11 and noise-canceling signal SN23 as much as possible such that the phase difference between noise signal SN11 and noise-canceling signal SN23 is smaller than a phase difference which can be controlled by phase controller 147. That is, when the phase of noise signal SN21 advances with respect to the phase of noise signal SN11, delay unit 144 delays noise signal SN21 such that the phase of noise signal SN11 is delayed with respect to the phase of noise signal SN22, and approaches the phase of noise signal SN22.

This operation reduces the number of times to repeating the operation of cancel-signal generator 135 to produce noise-canceling signal SN23.

Thus, noise canceller 236 can cancels nose signal SN11 in a short time, thus rapidly improving the receiving sensitivity deteriorating in a region having weak electric fields.

Delay unit 144 can be implemented by a simple circuit including passive components, such as capacitors, inductors, and resistors to determine the predetermined delay time.

The predetermined delay time of delay unit 144 can be changed appropriately according a channel or a frequency of the received signal. This operation reduces the time to adjust the delay time of delay unit 144 to have an optimum value.

### Exemplary Embodiment 3

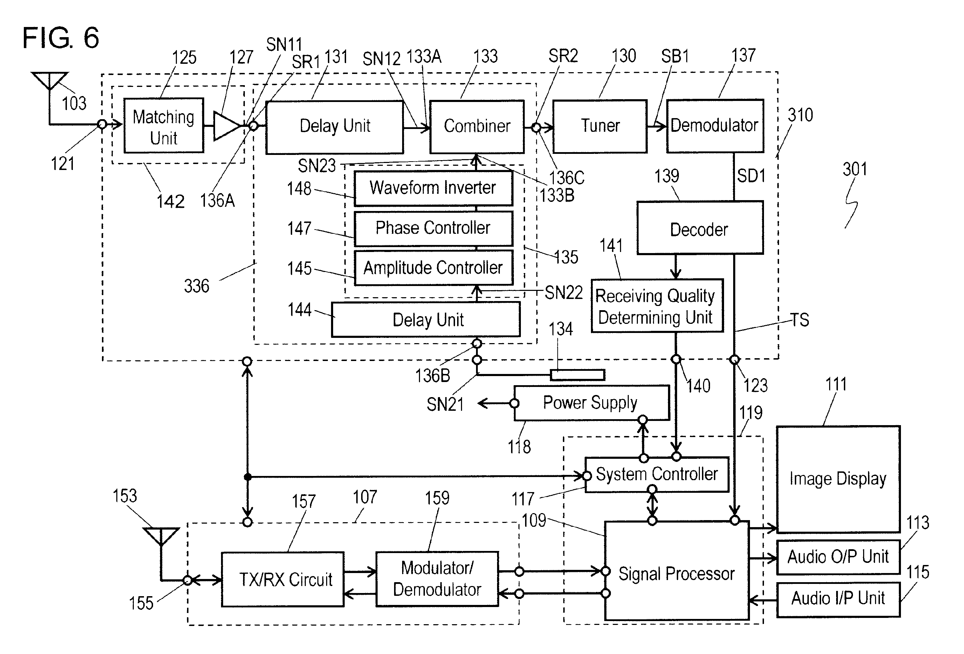

Fig. 6 is a block diagram of portable device 301, an electronic device according to Exemplary Embodiment 3 of the present invention. In Fig. 6, components identical to those of portable devices 101 and 201 shown in Figs. 1 and 4 are denoted by the same reference numerals.

Portable device 101 according to Embodiment 1 includes delay unit 131. Portable device 301 according to Embodiment 3 includes both of delay units 131 and 144.

Portable device 301 shown in Fig. 6 includes radio frequency (RF) receiving section 310 for receiving an RF signal from antenna 103. Noise canceller 336 includes delay units 131 and 144, cancel-signal generator 135, and combiner 133.

Portable device 301 operates identically to portable devices 101 and 201, providing the same effects.

Portable device 301 shown in Fig. 6 includes both of delay units 131 and 144. Even in the case that the phase difference between noise signal SN12 and noise canceling signal SN23 is large, the portable device reduces the phase difference as much as possible to cause the phase difference to be smaller than a phase difference which can be controlled by phase controller 147 regardless of the relation between noise signals SN11 and SN22 in phase.

Combiner 133 adds up noise signal SN12 and noise-canceling signal SN23 to output only the received signal having noise signal SN11 cancelled,

In noise canceller 336, even in the case that noise signal SN12 and noise canceling signal SN21 have not only a difference between the signals in phase and amplitude but also a phase difference due to a large time difference, delay units 131 and 144 reduces the phase difference between noise signal SN12 and noise canceling signal SN22 as much as possible.

Reducing the phase difference between noise signals SN12 and SN22 reduces the number of times to repeating the operation of cancel-signal generator 135 to produce noise-canceling signal SN23, accordingly allowing noise canceller 336 to cancel nose signal SN11 in a short time.

Noise canceller 336 included in RF receiving section 310 capable to receiving a television signal improves the receiving sensitivity deteriorating in a region having weak electric fields.

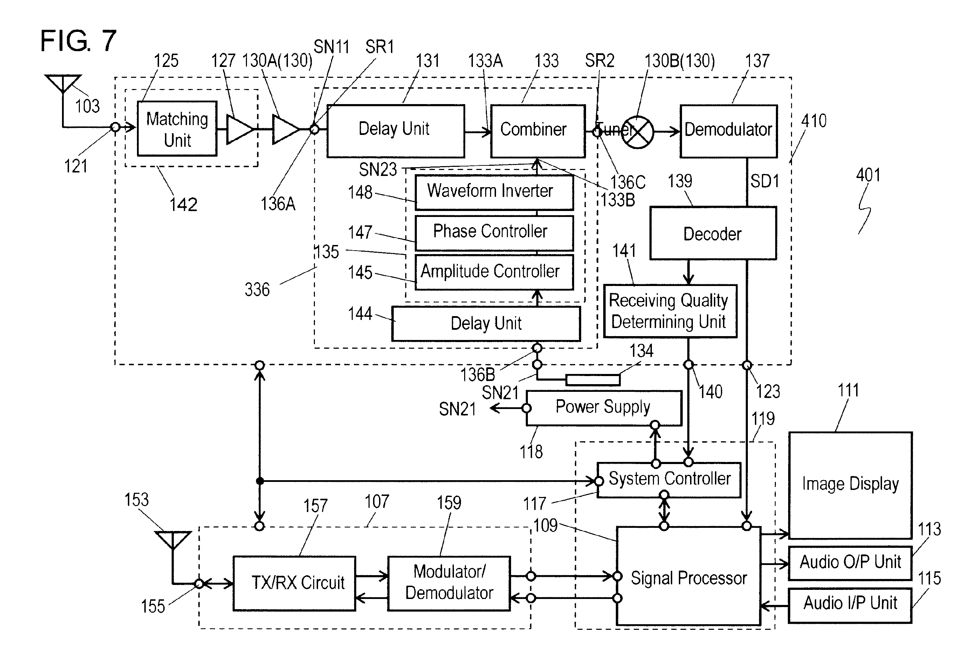

Fig. 7 is a block diagram of portable device 401, another electronic device according to Embodiment 3. In Fig. 7, components identical to those of portable device 301 shown in Fig. 6 are denoted by the same reference numerals.

Portable device 401 shown in Fig. 7 includes radio frequency (RF) receiving section 410 receiving an RF signal from antenna 103. RF receiving section 410 includes tuner 130. Tuner 130 includes radio frequency (RF) amplifier 130A for controlling the gain of received signal SR1, and mixer 130B for heterodyning a signal output from RF amplifier 130A.

Noise canceller 336 is connected not between antenna matching unit 142 and tuner 130, but between RF amplifier 130A and mixer 130B of tuner 130.

In portable device 401, RF amplifier 130A reduces deterioration of a noise figure of RF receiving section 105 due to insertion loss and matching loss of noise canceller 336. This reduces the deterioration of the receiving sensitivity due to the insertion of noise canceller 336.

The portable device can include noise canceller 136 or 236 instead of noise canceller 336.

When the function of portable telephone of portable device 101 is used, transmitting/receiving antenna 153 for the portable telephone outputs a transmission signal having high power while talking or standing by. This transmission signal as noise signal SN1 can be cancelled from received signal SR1 by noise canceller 336 (136, 236).

Noise canceller 336 (136, 236) can be used not only in portable device 401 (101, 201), such as a portable telephone with a television function, a portable game machine, a portable computer, or a portable dictionary, but also in other RF communication devices, providing the same effects.

## Claims

1. A noise canceller comprising:
an input terminal for receiving an input signal containing a received signal and a first noise signal generated by a noise source;
a first delay unit for delaying the input signal as to delay the received signal and the first noise signal;
a pick-up antenna for receiving a second noise signal generated by the noise source;
a cancel-signal generator for generating a noise-canceling signal based on the second noise signal; and
a combiner for combining the delayed input signal and the noise-canceling signal so as to cancel the first noise signal contained in the input signal, and outputting the received signal.

2. The noise canceller according to claim 1, wherein the pick-up antenna is located close to the noise source.

3. The noise canceller according to claim 1, wherein the cancel-signal generator includes
an amplitude controller for controlling an amplitude of the second noise signal,
a phase controller for controlling a phase of the second noise signal, and
a waveform inverter for inverting a waveform of the second noise signal.

4. The noise canceller according to claim 1, wherein, when a phase of the first noise signal advances with respect to a phase of the second noise signal, the first delay unit delays the first noise signal such that the phase of the delayed first noise signal is delayed with respect to the phase of the second noise signal, and approaches the phase of the second noise signal.

5. The noise canceller according to claim 1, wherein the first delay unit delays the first noise signal by a predetermined delay time.

6. The noise canceller according to claim 5, wherein the predetermined delay time is changed depending on the received signal.

7. The noise canceller according to claim 1, further comprising a second delay unit for delaying the second noise signal.

8. The noise canceller according to claim 7, wherein
the first delay unit delays the first noise signal by a first predetermined delay time, and
the second delay unit delays the second noise signal by a second predetermined delay time.

9. The noise canceller according to claim 8, wherein the first predetermined time and the second predetermined time are changed depending on the received signal.

10. A noise canceller comprising:
an input terminal for receiving an input signal containing a received signal and a first noise signal generated by a noise source;
a pick-up antenna for receiving a second noise signal generated by the noise source;
a delay unit for delaying the second noise signal;
a cancel-signal generator for generating a noise-canceling signal based on the delayed second noise signal; and
a combiner for combining the input signal and the noise-canceling signal so as to cancel the first noise signal contained in the input signal, and outputting the received signal.

11. The noise canceller according to claim 10, wherein the pick-up antenna is located close to the noise source.

12. The noise canceller according to claim 10, wherein the cancel-signal generator includes
an amplitude controller for controlling an amplitude of the delayed second noise signal,
a phase controller for controlling a phase of the delayed second noise signal, and
a waveform inverter for inverting a waveform of the delayed second noise signal.

13. The noise canceller according to claim 10, wherein, when a phase of the second noise signal advances with respect to a phase of the first noise signal, the second delay unit delays the second noise signal such that a phase of the first noise signal is delayed with respect to the phase of the delayed second noise signal, and approaches the phase of the delayed second noise signal.

14. The noise canceller according to claim 10, wherein the second delay unit delays the second noise signal by a predetermined delay time.

15. The noise canceller according to claim 14, wherein the predetermined delay time is changed depending on the received signal.

16. An electronic device comprising:
a noise source;
an input terminal for receiving an input signal containing a received signal and a first noise signal generated by the noise source;
a delay unit for delaying the input signal;
a pick-up antenna for receiving a second noise signal generated by the noise source;
a cancel-signal generator for generating a noise-canceling signal based on the second noise signal;
a combiner for combining the delayed input signal and the noise-canceling signal so as to cancel the first noise signal contained in the input signal, and outputting the received signal;
a tuner for tuning the received signal output from the combiner of the noise canceller; and
a demodulator for demodulating the received signal tuned by the tuner.

17. An electronic device comprising:
a noise source;
an input terminal for receiving an input signal containing a received signal and a first noise signal generated by the noise source;
a pick-up antenna for receiving a second noise signal generated by the noise source;
a delay unit for delaying the second noise signal;
a cancel-signal generator for generating a noise-canceling signal based on the delayed second noise signal;
a combiner for combining the input signal and the noise-canceling signal so as to cancel the first noise signal contained in the input signal, and outputting the received signal;
a tuner for tuning the received signal output from the combiner of the noise canceller; and
a demodulator for demodulating the received signal tuned by the tuner.
